# EUROPEAN PATENT APPLICATION

(11) **EP 4 361 103 A1**
(43) Date of publication of application: **01.05.2024**
(21) Application number: 23171988.1
(22) Date of filing: 08.05.2023
(51) Int. Cl.: C01G 45/12, C01G 53/00, H01M 4/505

(54) **POSITIVE ELECTRODE ACTIVE MATERIAL AND LITHIUM SECONDARY BATTERY COMPRISING THE SAME**

(30) Priority: 27.10.2022 KR 20220140024
(71) Applicant: ECOPRO BM CO., LTD., Cheongju-si, Chungcheongbuk-do 28116 (KR)
(72) Inventor: LIM, Ra Na, 28116 Cheongju-si, Chungcheongbuk-do (KR); JUNG, Hyun Su, 28116 Cheongju-si, Chungcheongbuk-do (KR); LIM, Kyung Min, 28116 Cheongju-si, Chungcheongbuk-do (KR); PARK, Eun Hee, 28116 Cheongju-si, Chungcheongbuk-do (KR); KIM, Seong Kyun, 28116 Cheongju-si, Chungcheongbuk-do (KR)
(74) Representative: Vossius & Partner Patentanwälte Rechtsanwälte mbB

(57) **Abstract**

The present invention relates to a positive electrode active material and a lithium secondary battery including the same, and more particularly, to a positive electrode active material including an overlithiated lithium manganese-based oxide, and capable of preventing the degradation of electrochemical properties of a lithium secondary battery, including rate characteristics, caused by an excess of lithium and manganese in the lithium manganese-based oxide and reducing side reactions between the lithium manganese-based oxide and a liquid electrolyte during high-voltage operation through induction of the growth of primary particles constituting the lithium manganese-based oxide.

## Description

### BACKGROUND

### 1. Field of the Invention

The present invention relates to a positive electrode active material and a lithium secondary battery including the same, and more particularly, to a positive electrode active material including an overlithiated lithium manganese-based oxide, and capable of preventing the degradation of electrochemical properties of a lithium secondary battery, including rate characteristics, caused by an excess of lithium and manganese in the lithium manganese-based oxide and reducing side reactions between the lithium manganese-based oxide and a liquid electrolyte during high-voltage operation through induction of the growth of primary particles constituting the lithium manganese-based oxide.

### 2. Discussion of Related Art

Batteries store electrical power by using materials facilitating an electrochemical reaction at a positive electrode and a negative electrode. As a representative example of such batteries, there is a lithium secondary battery storing electrical energy due to a difference in chemical potential when lithium ions are intercalated/deintercalated into/from a positive electrode and a negative electrode.

The lithium secondary battery uses materials enabling reversible intercalation/deintercalation of lithium ions as positive electrode and negative electrode active materials, and is manufactured by charging an organic electrolyte solution or a polymer electrolyte solution between the positive electrode and the negative electrode.

A representative material used as a positive electrode active material of a lithium secondary battery is a lithium composite oxide. The lithium composite oxide may be LiCoO₂, LiMn₂O₄, LiNiO₂, LiMnO₂, or an oxide in which Ni, Co, Mn or Al is complexed.

Among the positive electrode active materials, LiCoO₂ is most widely used due to excellent lifetime characteristics and charge/discharge efficiency, but it is expensive due to cobalt being a limited resource, which is used as a raw material, and thus has a disadvantage of limited price competitiveness.

Lithium manganese oxides such as LiMnO₂ and LiMn₂O₄ have advantages of excellent thermal safety and low costs, but also have problems of small capacity and poor high-temperature characteristics. In addition, while a LiNiO₂-based positive electrode active material exhibits a battery characteristic such as a high discharge capacity, due to cation mixing between Li and a transition metal, it is difficult to synthesize the LiNiO₂-based positive electrode active material, thereby causing a big problem in rate characteristics.

In addition, depending on the intensification of such a cation mixing, a large amount of Li by-products is generated. Since most of the Li by-products include LiOH and Li₂CO₃, they may cause gelation in preparation of a positive electrode paste, or cause gas generation according to repeated charging/discharging after the manufacture of an electrode. In addition, residual Li₂CO₃ in the Li by-product increases cell swelling to act as the cause of degrading a lifetime characteristic.

Various candidate materials for compensating for these shortcomings of conventional positive electrode active materials are being suggested.

In one example, there is on-going research to use an overlithiated lithium manganese-based oxide in which an excess of Mn among transition metals is included and a lithium content is higher than the sum of the contents of the transition metals as a positive electrode active material for a lithium secondary battery. Such an overlithiated lithium manganese-based oxide is also referred to as an overlithiated layered oxide (OLO).

Although the OLO has an advantage in that it can theoretically exhibit high capacity under a high voltage operation environment, in fact, due to an excessive amount of Mn contained in the oxide, the electrical conductivity is relatively low, and thus the rate capability of a lithium secondary battery using OLO is low. As such, when the rate capability is low, there is a problem in which charge/discharge capacity and lifespan efficiency (cycling capacity retention) are degraded during the cycling of a lithium secondary battery.

In addition, during the cycling of a lithium secondary battery using OLO, a decrease in charge/discharge capacity or voltage decay may be caused by a phase transition caused by the migration of a transition metal in the lithium manganese-based oxide. For example, when a transition metal in a lithium manganese-based oxide having a layered crystal structure migrates in an unintended direction to induce phase transition, spinel or a crystal structure similar thereto may be generated entirely and/or partially in the lithium manganese-based oxide.

To solve the above-described problems, although research of changing the composition of OLO has been conducted, such an attempt has not yet reached a commercialization level.

### SUMMARY OF THE INVENTION

In the lithium secondary battery market, the growth of lithium secondary batteries for electric vehicles is driving the market, and accordingly, the demand for positive electrode active materials used in lithium secondary batteries is also continuously increasing.

For example, conventionally, to ensure stability, lithium secondary batteries using LFP have mainly been used, but recently, the use of a nickel-based lithium composite oxide having a larger energy capacity per weight than LFP tends to be increasing.

In addition, recently, nickel-based lithium composite oxides mainly used as positive electrode active materials for high-capacity lithium secondary batteries essentially use three-component metal elements such as nickel, cobalt and manganese or nickel, cobalt and aluminum. However, since cobalt is not only unstable in supply, but also excessively expensive compared to other raw materials, a positive electrode active material with a new composition, which can reduce a cobalt content or exclude cobalt is needed.

Considering these circumstances, an overlithiated lithium manganese-based oxide can meet the above-mentioned expectations of the market, but there a limitation that the lithium manganese-based oxide still lacks electrochemical properties or stability to replace a commercialized positive electrode active material such as a ternary lithium composite oxide of the composition of nickel-cobalt-manganese (NCM) or nickel-cobalt-aluminum (NCA).

For example, when a spinel or a similar crystalline structure thereto is entirely and/or partially formed in a lithium manganese-based oxide as a transition metal in the lithium manganese-based oxide migrates in an unintended direction, it has been described above that a decrease in charge/discharge capacity or a voltage decay may occur during cycling of a lithium secondary battery using OLO.

However, compared with other types of commercialized positive electrode active materials, even when a conventional overlithiated lithium manganese-based oxide has disadvantages in terms of electrochemical properties and/or stability, the present inventors confirmed that the overlithiated lithium manganese-based oxide may also exhibit commercially available level electrochemical properties and stability by inducing the growth of primary particles constituting the lithium manganese-based oxide to make the primary particles have a different shape from the conventional shape.

Therefore, the present invention is directed to providing a positive electrode active material including an overlithiated lithium manganese-based oxide, in which the growth of primary particles constituting the lithium manganese-based oxide is induced to make the primary particles constituting the lithium manganese-based oxide have a different shape from those that is known so far.

Particularly, the present invention is directed to providing a positive electrode active material, which is able to prevent a rapid decrease in battery performance caused by side reactions that occur during an initial battery reaction under a high voltage condition by reducing the specific surface area of the lithium manganese-based oxide through induction of the growth of primary particles constituting the lithium manganese-based oxide.

In addition, the present invention is directed to providing a positive electrode active material, which is able to improve the electrochemical properties of the lithium manganese-based oxide consisting of primary particles by inducing the growth of primary particles constituting the lithium manganese-based oxide while co-doping heterogeneous elements.

Moreover, the present invention is directed to providing a lithium secondary battery that uses a positive electrode including the positive electrode active material defined by the present invention to prevent degradation of the electrochemical properties of the lithium secondary battery, including rate characteristics, caused by an excess of lithium and manganese in convention OLO and reduce side reactions occurring between the positive electrode active material and a liquid electrolyte during high-voltage operation, thereby realizing high stability.

To solve the above technical problems, one aspect of the present invention provides a positive electrode active material that includes a lithium manganese-based oxide in which a phase belonging to a C2/m space group and a phase belonging to an R3-m space group are dissolved or complexed.

Generally, in a commercialized ternary lithium composite oxide with a nickel-cobalt-manganese (NCM) or nickel-cobalt-aluminum (NCA) composition, the phase belonging to the R3-m space group is present as a single phase, but in the overlithiated lithium manganese-based oxide defined herein, a phase belonging to a C2/m space group and a phase belonging to an R3-m space group are dissolved or complexed.

In one embodiment, the lithium manganese-based oxide includes a secondary particle formed by aggregating a plurality of primary particles.

Here, by co-doping an oxide precursor of the lithium manganese-based oxide with heterogeneous elements while inducing the growth of the primary particles in calcination of the oxide precursor, a unique shape of the primary particles constituting the lithium manganese-based oxide may be formed.

Here, the lithium manganese-based oxide may include at least one selected from tungsten, molybdenum and niobium as a dopant, and at least some of the oxygens in the lithium manganese-based oxide may be substituted with a halogen.

The average value of the minor axis lengths of the primary particles constituting the lithium manganese-based oxide may be 160 nm or more, preferably, 160 nm or more and 500 nm or less, and more preferably, more than 210 nm and 400 nm or less.

The average value of the minor axis lengths of the primary particles may be measured for the primary particles exposed on the surface of the secondary particle from an SEM image of the secondary particle (e.g., calculated from 20 primary particles selected in the order from longest-to-shortest minor axis lengths from the primary particles exposed on the surface of the secondary particle from the SEM image of the secondary particle).

In addition, the interparticle porosity between the primary particles measured from the cross-sectional SEM image of the secondary particle formed by aggregating the primary particles may be 10% or less, and preferably, 5% or less.

The lithium manganese-based oxide may be an overlithiated lithium manganese-based oxide represented by Formula 1 below.

[Formula 1] rLi₂MnO_{3-b'}X'_{b'}·(1-r)LiₐM1ₓM2_{y}M3_{z}O_{2-b}X_{b}

Wherein,
M1 is at least one selected from Ni and Mn,
M2 is at least one selected from Ni, Mn, Co, Al, P, Nb, B, Ti, Zr, Ba, K, Mo, Si, Fe, Cu, Cr, Zn, Na, Ca, Mg, Pt, Au, Eu, Sm, W, V, Ta, Sn, Hf, Ce, Gd and Nd,
M3 is at least one selected from W, Mo and Nb,
M1 to M3 do not overlap,
X and X' are halogens capable of substituting for at least some of the oxygens in the lithium manganese-based oxide,
0<r≤0.7, 0<a≤1, 0≤b≤0.1, 0≤b'≤0.1, 0<x≤1, 0≤y<1, 0<z≤0.1 and 0<x+y+z≤1, provided that b and b' are not 0 at the same time.

At least some of the oxygen present in the lithium manganese-based oxide may be substituted with a halogen, preferably, fluorine. Specifically, the primary particle may be doped with fluorine.

In the calcination of the oxide precursor of the lithium manganese-based oxide, M3 and the halogen (e.g., fluorine) are preferably doped into the primary particle while the growth of the primary particle is induced.

In addition, another aspect of the present invention provides a positive electrode including the above-described positive electrode active material.

Moreover, still another aspect of the present invention provides a lithium secondary battery using the above-described positive electrode.

### DETAILED DESCRIPTION OF EXEMPLARY EMBODIMENTS

In order to better understand the present invention, certain terms are defined herein for convenience. Unless defined otherwise herein, scientific and technical terms used herein will have meanings commonly understood by those of ordinary skill in the art. In addition, unless specifically indicated otherwise, terms in a singular form also include plural forms, and terms in a plural form should be understood to include singular forms as well.

Hereinafter, a positive electrode active material including an overlithiated lithium manganese-based oxide and a lithium secondary battery including the positive electrode active material according to some embodiments of the present invention will be described in further detail.

### Positive electrode active material

According to one aspect of the present invention, a positive electrode active material that includes a lithium manganese-based oxide in which a phase belonging to a C2/m space group and a phase belonging to an R3-m space group are dissolved or complexed is provided.

The lithium manganese-based oxide includes at least lithium, nickel, and manganese. Here, when the content of lithium in the lithium manganese-based oxide is larger than the sum of the contents of other transition metals (generally, when a molar ratio of lithium to total metal elements except lithium (Li/Metal molar ratio) in the lithium manganese-based oxide is greater than 1), the lithium manganese-based oxide is also referred to as an overlithiated layered oxide (OLO).

Generally, considering that the content of manganese among all metal elements except lithium is 20 mol% or less in a commercially available ternary lithium composite oxide with a nickel-cobalt-manganese (NCM) or nickel-cobalt-aluminum (NCA) composition, the proportion of manganese among all metal elements in the lithium manganese-based oxide is relatively high (e.g., 50 mol% or more, and preferably, 55 to 75 mol%) compared to the commercially available ternary lithium composite oxide.

In addition, considering that, in the commercially available ternary lithium composite oxide with a nickel-cobalt-manganese (NCM) or nickel-cobalt-aluminum (NCA) composition, the content of nickel among all metal elements except lithium is 60 mol% or more (for a high-Ni type, 80 mol% or more), the proportion of nickel among all metal elements in the lithium manganese-based oxide is relatively low (e.g., less than 50 mol%, and preferably, 25 to 45 mol%) compared to the commercially available ternary lithium composite oxide.

The Li/Metal molar ratio measured from the lithium manganese-based oxide defined in the present invention is higher than that of the ternary lithium composite oxide such as nickel-cobalt-manganese (NCM) or nickel-cobalt-aluminum (NCA). For example, the Li/Metal molar ratio of the ternary lithium composite oxide such as nickel-cobalt-manganese (NCM) or nickel-cobalt-aluminum (NCA) has a value almost close to 1. On the other hand, the Li/Metal molar ratio of the lithium manganese-based oxide defined by the present invention may be higher than 1, preferably, 1.1 to 1.7, and more preferably, 1.2 to 1.6.

Despite the above-described difference in composition, the lithium manganese-based oxide may also serve as a composite metal oxide enabling the intercalation/deintercalation of lithium ions.

The lithium manganese-based oxide included in the positive electrode active material defined by the present invention includes a secondary particle formed by aggregating a plurality of primary particles. Here, in the lithium manganese-based oxide, a single particle, which is one primary particle, is present in some places.

The primary particles constituting the lithium manganese-based oxide may have various shapes within the range defined by the present invention.

A conventional overlithiated lithium manganese-based oxide has an aggregated form of primary particles generally with an average particle diameter of several to tens of nanometers, which is the form of a secondary particle in which a plurality of primary particles are aggregated.

On the other hand, according to the present invention, due to the induction of the growth of the primary particles, the primary particles constituting the lithium manganese-based oxide may have an average particle diameter of 0.1 to 5 µm, preferably, 0.1 to 1.0 µm, and more preferably, 0.25 to 0.75 µm.

The major axis length of the primary particle, the minor axis length of the primary particle, a ratio of the major axis length and the minor axis length (major axis length/minor axis length) of the primary particle and the average particle diameter ([major axis length+minor axis length]/2) of the primary particles may be calculated by measuring the major and minor axis lengths of primary particles exposed on the surface of the secondary particle and then calculating them as average values thereof.

For example, for the calculation, the average value of the results measured from all primary particles exposed on the surface of the secondary particle or the average value of the results measured from a plurality of primary particles selected from the primary particles exposed on the surface of the secondary particle (e.g., or calculated from a plurality (e.g., 10 or 20 primary particles, etc.) of primary particles selected in the order from longest-to-shortest minor axis lengths from the primary particles exposed on the surface of the secondary particle from the SEM image of the secondary particle) may be used.

When the average particle diameter of the primary particles is smaller than 0.1 µm, the specific surface area of the lithium manganese-based oxide (secondary particle) composed of the primary particles is relatively large. In this case, during the storage or operation of the lithium secondary battery, the possibility of causing side reactions between the lithium manganese-based oxide and a liquid electrolyte may increase.

On the other hand, when the average particle diameter of the primary particles is larger than 5 µm, as the growth of the primary particles is excessively induced, the diffusion path of lithium ions in the primary particles also becomes longer. When the diffusion path of lithium ions in the primary particles is excessively long, the migration of lithium ions in the primary particles and the diffusivity of lithium ions mediated by the primary particles are degraded, which is a cause of increasing the resistance of the lithium manganese-based oxide (secondary particle) composed of the primary particles.

Accordingly, to reduce the specific surface area of the lithium manganese-based oxide, and at the same time, prevent the degradation in migration of lithium ions in the primary particles and diffusivity of lithium ions mediated by the primary particles, the average particle diameter of the primary particles is preferably 0.1 to 5 µm, more preferably, 0.1 to 1.0 µm, even more preferably 0.25 to 0.75 µm, and still more preferably, 0.40 to 0.65 µm.

According to the present invention, when the definition of the minor axis length to be described is satisfied on the premise that the primary particles constituting the lithium manganese-based oxide satisfy the above-described average particle diameter range (more preferably, when the definitions of the minor axis length and the major axis length to be described later are simultaneously satisfied on the premise that the above-described range of average particle diameters is satisfied), the specific surface area of the primary particles may be effectively reduced within a range that alleviates the decrease in diffusivity of lithium ions mediated by the primary particles.

The average value of the minor axis lengths of the primary particles calculated from the primary particles constituting the lithium manganese-based oxide may be 160 nm or more, preferably, 160 nm or more and 500 nm or less, and more preferably, more than 210 nm and 400 nm or less. As described above, as the average value of the minor axis lengths of the primary particles, the average value of the minor axis lengths measured from all of the primary particles exposed on the surface of the secondary particle or a plurality (e.g., 10 or 20 primary particles, etc.) of primary particles selected in the order from longest-to-shortest minor axis lengths from the primary particles exposed on the surface of the secondary particle may be used.

When the average value of the minor axis lengths of the primary particles is smaller than 160 nm, the specific surface area of the lithium manganese-based oxide (secondary particle) consisting of the primary particles relatively increases, and during the storage or operation of the lithium secondary battery, the possibility of causing side reactions between the lithium manganese-based oxide and a liquid electrolyte may increase.

In addition, from the viewpoint of reducing the deviation of the minor axis length of the primary particle exposed on the surface of the secondary particle, the minimum value of the minor axis length measured for the primary particle exposed on the surface of the secondary particle may be 80 nm or more, preferably, 100 nm or more and 300 nm or less, and more preferably, 160 nm or more and 250 nm or less, and the maximum value of the minor axis length measured for the primary particle exposed on the surface of the secondary particle may be 1 µm or less, preferably, 230 nm or more and 1 µm or less, and more preferably, 250 nm or more and 800 nm or less. As the deviation of the minor axis length of the primary particles exposed on the surface of the secondary particle is smaller, it is possible to uniformly maintain the surface kinetics of the secondary particle.

The fact that the average value of the minor axis lengths of the primary particles is larger than 500 nm means that the growth of the primary particles constituting the secondary particle was generally excessively induced. As the growth of the primary particles is unnecessarily promoted, there is a concern that the mobility of lithium ions in the primary particle and the diffusivity of lithium ions mediated by the primary particle may decrease.

In addition, the average value of the major axis lengths of the primary particles calculated from the primary particles constituting the lithium manganese-based oxide may be 570 nm or more, preferably, 570 nm or more and 1 µm or less, and more preferably, 600 nm or more and 820 nm or less. As described above, as the average value of the major axis lengths of the primary particles, the average value of the major axis lengths measured from all of the primary particles exposed on the surface of the secondary particle or a plurality (e.g., 10 or 20 primary particles, etc.) of primary particles selected in the order from longest-to-shortest minor axis lengths from the primary particles exposed on the surface of the secondary particles may be used.

When the average value of the major axis lengths of the primary particles is smaller than 570 nm, the specific surface area of the lithium manganese-based oxide (secondary particle) consisting of the primary particles relatively increases, and the possibility of causing side reactions between the lithium manganese-based oxide and a liquid electrolyte may increase during storage or operation of the lithium secondary battery.

In addition, from the viewpoint of reducing the deviation of the major axis length of the primary particle exposed on the surface of the secondary particle, the minimum value of the major axis lengths measured for the primary particles exposed on the surface of the secondary particle may be 245 nm or more, and preferably, 245 nm or more and 450 nm or more, and the maximum value of the major axis lengths measured for the primary particles exposed on the surface of the secondary particle may be 1.5 µm or less, preferably, 880 nm or more and 1.5 µm or less, and more preferably, 920 nm or more and 1.3 µm or less. As the deviation of the major axis length of the primary particle exposed on the surface of the secondary particle is smaller, it is possible to uniformly maintain the surface kinetics of the secondary particles.

That the average value of the major axis lengths of the primary particles is larger than 1 µm means that the growth of the primary particles constituting the secondary particle was generally excessively induced. As the growth of the primary particles is unnecessarily promoted, there is a concern that the diffusivity of lithium ions mediated by the primary particle may decrease.

In addition, when the major axis length in the primary particle excessively increases, as the diffusion path of lithium ions in the primary particle becomes excessively long, the diffusivity of lithium ions mediated by the primary particles is reduced, and furthermore, the resistance of the primary particle increases. In addition, the possibility the polarization phenomenon occurring in the primary particles increases. When the polarization phenomenon in the primary particles intensifies, the possibility of cracks being generated in the primary particles may increase.

When the lithium manganese-based oxide is present as a secondary particle in which a plurality of primary particles are aggregated, the average particle diameter ([major axis length+minor axis length]/2) of the secondary particles may be 0.5 to 15 µm. The average particle diameter of the secondary particles may vary depending on the number of the primary particles constituting the secondary particle. In addition, as the growth of the primary particles is induced to increase the average particle diameter of the primary particles, the number of the primary particles constituting the secondary particle may decrease.

As such, as the growth of the primary particles constituting the lithium manganese-based oxide defined by the present invention is induced, an overall reduced specific surface area may appear. Accordingly, as the lithium manganese-based oxide simultaneously achieves sufficient surface kinetics and improved surface stability, side reactions between the lithium manganese-based oxide and the liquid electrolyte may be reduced. This result can contribute to prevention of the early deterioration of the positive electrode active material including the lithium manganese-based oxide defined by the present invention and further prolonging the lifetime of a lithium secondary battery using the positive electrode active material.

While there are various methods of inducing the growth of the primary particles in the lithium manganese-based oxide, the effect intended by the present invention may not be realized due to the difference between the methods of inducing the growth of the primary particles. According to the present invention, a method of inducing the growth of the primary particles and doping an oxide precursor with heterogeneous elements during the calcination of the oxide precursor of the lithium manganese-based oxide is used. Meanwhile, even when doping is induced during the calcination of a hydroxide precursor of the lithium manganese-based oxide or an oxide precursor of the lithium manganese-based oxide, since the effect of crystal growth intended by the present invention may not be realized, reference will be made to experimental examples to be described below for the detailed description related thereto.

The lithium manganese-based oxide defined by the present invention may be an overlithiated lithium manganese-based oxide represented by Formula 1 below.

[Formula 1] rLi₂MnO_{3-b'}X'_{b'}·(1-r)LiₐM1ₓM2_{y}M3_{z}O_{2-b}X_{b}

Wherein,
M1 is at least one selected from Ni and Mn,
M2 is at least one selected from Ni, Mn, Co, Al, P, Nb, B, Ti, Zr, Ba, K, Mo, Si, Fe, Cu, Cr, Zn, Na, Ca, Mg, Pt, Au, Eu, Sm, W, V, Ta, Sn, Hf, Ce, Gd and Nd,
M3 is at least one selected from W, Mo and Nb,
M 1 to M3 do not overlap,
X and X' are halogens capable of substituting for at least some of oxygens in the lithium manganese-based oxide, 0<r≤0.7, 0<a≤1, 0≤b≤0.1, 0≤b'≤0.1, 0<x≤1, 0≤y<1, 0<z≤0.1 and 0<x+y+z≤1, provided that b and b' are not 0 at the same time.

In Formula 1, when M1 is Ni, M2 may include Mn, and when M1 is Mn, M2 may include Ni. In addition, when M1 is Ni and Mn, M2 may not be present, or when present, M2 may be an element other than Ni and Mn.

Heterogeneous dopants in the lithium manganese-based oxide represented by Formula 1 are denoted by M3 and X. M3 may be at least one selected from W, Mo and Nb, and if necessary, may include a plurality of elements selected from W, Mo and Nb.

For the types of halogens that can be used as X and X', refer to the periodic table, and F, Cl, Br and/or I may be used, and preferably, F may be used.

As described above, for halogen doping to induce the growth of the primary particles constituting the lithium manganese-based oxide, at least some of the oxygens present in the lithium manganese-based oxide may be substituted with a halogen.

When an over-calcination method for performing thermal treatment at a relatively high temperature is used without halogen doping to induce the growth of the primary particles constituting the lithium manganese-based oxide, although the growth of the primary particles is possible, the crystal structure of the primary particle is damaged and thus the early deterioration of the positive electrode active material can occur.

When fluorine is used as an anionic dopant in the growth of the primary particles, the growth of the primary particles may be induced within the range of mitigating the degradation in the diffusivity of lithium ions mediated by the primary particles.

For fluorine doping of the primary particle, at least one anionic dopant selected from LiF, MgF₂, HF, F₂, XeF₂, TbF₄, CeF₄, CoF₃, AgF₂, MoF₃, AgF, CuF₂, FeF₃, CuF, VF₃, CrF₃, ZrF₄, BaF₂, CaF₂, AlF₃, NH₄F, CeF₃ and CsF, and preferably, at least one anionic dopant selected from LiF and MgF₂ may be used.

The content of fluorine doped into the primary particle may be predicted with the fluorine content (i.e., b and b' values of Formula 1) in the lithium manganese-based oxide represented by Formula 1. In addition, when neither b nor b' of Formula 1 is 0, b+b' may be 0.2 or less, and preferably, 0.1 or less.

When co-doping is induced by additionally using an M3-containing dopant in addition to the above-described anionic dopant during the calcination of the oxide precursor, the primary particles may be substantially grown in a spherical shape, instead of being grown in a plate shape.

As the M3-containing dopant, at least one selected from a hydroxide, an oxide, a carbonate, a nitride, a sulfide and a phosphate including at least one element selected from tungsten, molybdenum and niobium may be used.

As described above, when co-doping of the primary particle and the growth of the primary particles are induced using the combination of the above-described anionic dopant and M3-containing dopant in the calcination of the oxide precursor, as the shape of the primary particle approaches a spherical shape, it is possible to reduce the porosity of the secondary particle formed by aggregating the primary particles.

When the porosity in the lithium manganese-based oxide is reduced, insufficient electrochemical properties of the positive electrode active material including the lithium manganese-based oxide may be compensated for by increasing the capacity per unit volume.

Specifically, the interparticle porosity between the primary particles, which can be measured from the cross-sectional SEM image of the secondary particle, may be 10% or less, and preferably, 5% or less. As the voids between the primary particles in the secondary particle decrease, the energy density per unit volume of the lithium manganese-based oxide may be improved.

In addition, when the co-doping of the primary particle and the growth of the primary particles are induced using the combination of the above-described anionic dopant and M3-containing dopant during the calcination of the oxide precursor, it may be particularly effective in reducing the porosity in the surface portion of the secondary particle.

For example, when the distance from the center to surface of the secondary particle set from the cross-sectional SEM image of the secondary particle is r, the surface portion of the secondary particle may be defined as an external bulk region in which a distance from the center of the secondary particle is 0.5r to 1.0r. Here, the porosity in the external bulk region that can be measured from the cross-sectional SEM image of the secondary particle may be 1% or less, and preferably, 0.72% or less.

The improvement in porosity in the lithium manganese-based oxide may positively affect improvements in BET specific surface area and press density of the positive electrode active material including the lithium manganese-based oxide.

The lithium manganese-based oxide defined by the present invention may have a specific surface area of 2.0 m²/g or less. More specifically, the lithium manganese-based oxide may have a BET specific surface area of 2.0 m²/g or less, preferably, 0. 3 m²/g or more and 2.0 m²/g or less, and more preferably, 0.3 m²/g or more and 1.1 m²/g or less by inducing co-doping of the primary particle and the growth of the primary particle using the combination of the above-described anionic dopant and M3-containing dopant during the calcination of the oxide precursor.

In addition, when the positive electrode active material containing the lithium manganese-based oxide is compressed at a pressure of 4.5 tons, the press density may be more than 2.53 g/cc, and preferably, 2.58 g/cc or more.

The lithium manganese-based oxide represented by Formula 1 may optionally include cobalt. When the lithium manganese-based oxide includes cobalt, the mole fraction of the cobalt relative to the number of moles of all metal elements in the lithium manganese-based oxide may be 20% or less, preferably, 15% or less, and more preferably, 10% or less. In another case, the lithium manganese-based oxide represented by Formula 1 may have a cobalt-free composition, in which cobalt is not included.

The Li/Metal molar ratio measured from the lithium manganese-based oxide represented by Formula 1 may be greater than 1, preferably, 1.1 to 1.7, and more preferably, 1.2 to 1.6. It is possible to form an overlithiated lithium manganese-based oxide when the Li/Metal molar ratio measured from the lithium manganese-based oxide has a value greater than at least 1. In addition, in order for the lithium manganese-based oxide to properly form a solid solution in which a phase belonging to a C2/m space group and a phase belonging to an R3-m space group are dissolved or complexed and also exhibit a high capacity under a high voltage operating environment, the Li/Metal molar ratio of the lithium manganese-based oxide is preferably 1.2 to 1.6.

In addition, to properly form the solid solution in which the phase belonging to the C2/m space group and the phase belonging to the R3-m space group are dissolved or complexed, the content of manganese among all metal elements except lithium present in a lithium manganese-based oxide represented by Formula 1 is preferably 50 mol% or more. In order for the lithium manganese-based oxide to have the characteristics of OLO exhibiting a high capacity under a high voltage operating environment, the content of manganese among all metal elements except lithium in the lithium manganese-based oxide is more preferably 50 mol% or more and less than 80 mol%, and even more preferably, 55 to 75 mol%.

When the content of manganese in the lithium manganese-based oxide is more than 80 mol%, a phase transition may occur due to the migration of a transition metal (particularly, manganese) in the lithium manganese-based oxide during formation and/or operation of a lithium secondary battery. Such a phase transition forms a spinel phase, and the spinel phase acting as an impurity in the lithium manganese-based oxide may induce a decrease in charge/discharge capacities or voltage decay during the cycling of a lithium secondary battery.

To properly form a solid solution in which the phase belonging to the C2/m space group and the phase belonging to the R3-m space group are dissolved or complexed, the content of nickel among all metal elements except lithium in the lithium manganese-based oxide represented by Formula 1 is preferably less than 50 mol%.

When the content of nickel in the lithium manganese-based oxide is 50 mol% or more, since it is difficult to sufficiently form the C2/m phase or to form a solid solution sufficiently with the phase belonging to the C2/m space group and the phase belonging to the R3-m space group, phase separation may be caused during formation and/or operation of a lithium secondary battery.

Generally, in a commercialized ternary lithium composite oxide with a nickel-cobalt-manganese (NCM) or nickel-cobalt-aluminum (NCA) composition, the phase belonging to the R3-m space group is present in a single phase.

On the other hand, the overlithiated lithium manganese-based oxide represented by Formula 1 is present as a composite oxide in which an oxide of the phase belonging to the C2/m space group (hereinafter, referred to as "C2/m phase") represented by rLi₂MnO_{3-b'}X'_{b'} and an oxide of the phase belonging to the R3-m space group (hereinafter, referred to as "R3-m phase") represented by (1-r)LiₐM1ₓM2_{y}M3_{z}O_{2-b}X_{b} are dissolved or complexed. For example, the lithium manganese-based oxide may be present in a state in which the C2/m-phase oxide and the R3-m-phase oxide form a solid solution.

Here, a composite oxide in which the phase belonging to the C2/m space group and the phase belonging to the R3-m space group are simply physically and/or chemically bonded or attached does not correspond to the solid solution defined therein.

For example, a composite oxide having the phase belonging to the C2/m space group whose surface is coated with a metal oxide with the phase belonging to the R3-m space group by mixing a metal oxide having the phase belonging to the C2/m space group and the metal oxide with the phase belonging to the R3-m space group does not correspond to the solid solution defined herein.

In the lithium manganese-based oxide represented by Formula 1, when r is more than 0.7, the proportion of Li₂MnO_{3-b'}X'_{b'}, which is a C2/m phase oxide in the lithium manganese-based oxide is excessively large, and therefore, the content of manganese in the positive electrode active material is excessively high, which may lower the discharge capacity. That is, to improve surface kinetics by sufficiently activating a C2/m-phase oxide with relatively high resistance in the lithium manganese-based oxide, the R3-m phase oxide is preferably present in a predetermined proportion or more.

### Lithium secondary battery

According to another embodiment of the present invention, a positive electrode including a positive electrode current collector and a positive electrode active material layer formed on the positive electrode current collector may be provided. Here, the positive electrode active material layer may include the above-described positive electrode active material prepared by a preparation method according to various embodiments of the present invention as a positive electrode active material.

Accordingly, a detailed description of the lithium manganese-based oxide will be omitted, and only the remaining components not described above will be described below. In addition, hereinafter, the above-described lithium manganese-based oxide is referred to as a positive electrode active material for convenience.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may conventionally have a thickness of 3 to 500 µm, and fine irregularities may be formed on the surface of the current collector, thereby increasing the adhesive strength of a positive electrode active material. For example, the positive electrode current collector may be used in various forms such as a film, a sheet, a foil, a net, a porous body, foam, a non-woven fabric, etc.

The positive electrode active material layer may be prepared by coating the positive electrode current collector with a positive electrode slurry composition including the positive electrode active material, a conductive material, and a binder included optionally as needed.

Here, the positive electrode active material is included at 80 to 99 wt%, and specifically, 85 to 98.5 wt% with respect to the total weight of the positive electrode active material layer. When the positive electrode active material is included in the above content range, excellent capacity characteristics may be exhibited, but the present invention is not limited thereto.

The conductive material is used to impart conductivity to an electrode, and is not particularly limited as long as it has electron conductivity without causing a chemical change in a battery. A specific example of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be generally contained at 0.1 to 15 wt% with respect to the total weight of the positive electrode active material layer.

The binder serves to improve attachment between particles of the positive electrode active material and the adhesive strength between the positive electrode active material and a current collector. A specific example of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), fluorine rubber, or various copolymers thereof, and one or a mixture of two or more thereof may be used. The binder may be included at 0.1 to 15 wt% with respect to the total weight of the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material and the binder and then imparting a viscosity for exhibiting excellent thickness uniformity when the slurry is applied to prepare a positive electrode.

In addition, in another exemplary embodiment, the positive electrode may be prepared by casting the positive electrode slurry composition on a separate support, and laminating a film obtained by delamination from the support on the positive electrode current collector.

Still another aspect of the present invention provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator film and a liquid electrolyte, which are interposed between the positive electrode and the negative electrode. Here, since the positive electrode is the same as described above, for convenience, detailed description for the positive electrode will be omitted, and other components which have not been described below will be described in detail.

The lithium secondary battery may further include a battery case accommodating an electrode assembly of the positive electrode, the negative electrode and the separator film, and optionally, a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminum-cadmium alloy. In addition, the negative electrode current collector may generally have a thickness of 3 to 500 µm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, foam, a non-woven fabric, etc.

The negative electrode active material layer may be formed by coating the negative electrode current collector with a negative electrode slurry composition including the negative electrode active material, a conductive material, and a binder optionally included as needed.

As the negative electrode active material, a compound enabling the reversible intercalation and deintercalation of lithium may be used. A specific example of the negative electrode active material may be a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, a Si alloy, a Sn alloy or an Al alloy; a metal oxide capable of doping and dedoping lithium such as SiO_{β} (0<β<2), SnO₂, vanadium oxide, or lithium vanadium oxide; or a composite including the metallic compound and the carbonaceous material such as a Si-C composite or a Sn-C composite, and any one or a mixture of two or more thereof may be used. In addition, as the negative electrode active material, a metal lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included at 80 to 99 wt% with respect to the total weight of the negative electrode active material layer.

The binder is a component aiding bonding between a conductive material, an active material and a current collector, and may be generally added at 0.1 to 10 wt% with respect to the total weight of the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber, nitrile-butadiene rubber, fluorine rubber, and various copolymers thereof.

The conductive material is a component for further improving conductivity of the negative electrode active material, and may be added at 10 wt% or less, and preferably, 5 wt% or less with respect to the total weight of the negative electrode active material layer. The conductive material is not particularly limited as long as it does not cause a chemical change in the battery, and has conductivity, and may be, for example, graphite such as natural graphite or artificial graphite; carbon black such as acetylene black, Ketjen black, channel black, furnace black, lamp black or thermal black; a conductive fiber such as a carbon fiber or a metal fiber; a metal powder such as fluorinated carbon, aluminum, or nickel powder; a conductive whisker such as zinc oxide or potassium titanate; a conductive metal oxide such as titanium oxide; or a conductive material such as a polyphenylene derivative.

In an exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

Meanwhile, in the lithium secondary battery, a separator film is not particularly limited as long as it is generally used in a lithium secondary battery to separate a negative electrode from a positive electrode and provide a diffusion path for lithium ions, and particularly, the separator film has a low resistance to ion mobility of a liquid electrolyte and an excellent electrolyte solution impregnation ability. Specifically, a porous polymer film, for example, a porous polymer film prepared of a polyolefin-based polymer such as an ethylene homopolymer, a propylene homopolymer, an ethylene/butene copolymer, an ethylene/hexene copolymer and an ethylene/methacrylate copolymer, or a stacked structure including two or more layers thereof may be used. In addition, a conventional porous non-woven fabric, for example, a non-woven fabric formed of a high melting point glass fiber or a polyethylene terephthalate fiber may be used. In addition, a coated separator film including a ceramic component or a polymer material may be used to ensure thermal resistance or mechanical strength, and may be optionally used in a single- or multilayered structure.

In addition, the electrolyte used in the present invention may be an organic electrolyte, an inorganic electrolyte, a solid polymer electrolyte, a gel-type polymer electrolyte, a solid inorganic electrolyte, or a molten-type inorganic electrolyte, which is able to be used in the production of a lithium secondary battery, but the present invention is not limited thereto.

Specifically, the electrolyte may include an organic solvent and a lithium salt.

The organic solvent is not particularly limited as long as it can serve as a medium enabling the transfer of ions involved in an electrochemical reaction of a battery. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C2 to C20 hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferably used, and a mixture of a cyclic carbonate (for example, ethylene carbonate or propylene carbonate) having high ion conductivity and high permittivity to increase the charge/discharge performance of a battery and a low-viscosity linear carbonate-based compound (for example, ethyl methyl carbonate, dimethyl carbonate or diethyl carbonate) is more preferably used. In this case, by using a mixture of a cyclic carbonate and a chain-type carbonate in a volume ratio of approximately 1:1 to 1:9, the electrolyte solution may exhibit excellent performance.

The lithium salt is not particularly limited as long as it is a compound capable of providing a lithium ion used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt is preferably in the range of 0.1 to 2.0M. When the concentration of the lithium salt is included in the above-mentioned range, the electrolyte has suitable conductivity and viscosity and thus can exhibit excellent electrolytic performance. Therefore, lithium ions can effectively migrate.

When the electrolyte used herein is a solid electrolyte, for example, a solid inorganic electrolyte such as a sulfide-based solid electrolyte, an oxide-based solid electrolyte, a nitride-based solid electrolyte, or a halide-based solid electrolyte may be used, and preferably, a sulfide-based solid electrolyte is used.

As a material for a sulfide-based solid electrolyte, a solid electrolyte containing Li, an X element (here, X is at least one selected from P, As, Sb, Si, Ge, Sn, B, Al, Ga and In) and S may be used. Examples of the sulfide-based solid electrolyte material may include Li₂S-P₂S₅, Li₂S-P₂S-LiX (here, X is a halogen element such as I or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (here, m and n are integers, and Z is Ge, Zn or Ga), Li₂S-GeS₂, Li₂S-SiS₂-Li₃PO₄, and Li₂S-SiS₂-LiₚMO_{q} (here, p and q are integers, and M is P, Si, Ge, B, Al, Ga or In).

A solid electrolyte, and preferably, a sulfide-based solid electrolyte may be amorphous, crystalline, or a state in which an amorphous phase and crystalline phase are mixed.

Materials for an oxide-based solid electrolyte include Li₇La₃Zr₂O₁₂, Li₇₋ₓLa₃Zr₁₋ₓNbₓO₁₂, Li₇₋₃ₓLa₃Zr₂AlₓO₁₂, Li₃ₓLa_{2/3-x}TiO₃, Li₁₊ₓAlₓTi₂₋ₓ(PO₄)₃, Li₁₊ₓAlₓGe₂₋ₓ(PO₄)₃, Li₃PO₄, Li₃₊ₓPO₄₋ₓNₓ (LiPON), and Li₂₊₂ₓZn₁₋ₓGeO₄ (LISICON).

The above-described solid electrolyte may be disposed as a separate layer (solid electrolyte layer) between a positive electrode and a negative electrode. In addition, the solid electrolyte may be partially included in a positive electrode active material layer of the positive electrode independent of the solid electrolyte layer, or the solid electrolyte may be partially included in a negative electrode active material of the negative electrode independent of the solid electrolyte layer.

To enhance lifetime characteristics of the battery, inhibit a decrease in battery capacity, and enhance discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. Here, the additive(s) may be included at 0.1 to 5 wt% with respect to the total weight of the electrolyte.

Since the lithium secondary battery including the positive electrode active material according to the present invention stably exhibits excellent discharge capacity, excellent output characteristics and excellent lifetime characteristics, it is useful in portable devices such as a mobile phone, a notebook computer and a digital camera and an electric vehicle field such as a hybrid electric vehicle (HEV).

The outer shape of the lithium secondary battery according to the present invention is not particularly limited, but may be a cylindrical, prismatic, pouch or coin type using a can. In addition, the lithium secondary battery may be used in a battery cell that is not only used as a power source of a small device, but also preferably used as a unit battery for a medium-to-large battery module including a plurality of battery cells.

According to still another exemplary embodiment of the present invention, a battery module including the lithium secondary battery as a unit cell and/or a battery pack including the same is provided.

The battery module or the battery pack may be used as a power source of any one or more medium-to-large devices including a power tool; an electric motor vehicle such as an electric vehicle (EV), a hybrid electric vehicle, and a plug-in hybrid electric vehicle (PHEV); and a power storage system.

Hereinafter, the present invention will be described in further detail with reference to examples. However, these examples are merely provided to exemplify the present invention, and thus the scope of the present invention will not be construed not to be limited by these examples.

### Preparation Example 1. Preparation of positive electrode active material

### Example 1

### (a) Preparation of precursor

An aqueous solution in which NiSO₄·6H₂O and MnSO₄·H₂O were mixed in a molar ratio of 40:60, NaOH, and NH₄OH were added in a reactor and stirred. The temperature in the reactor was maintained at 45 °C, and an N₂ gas was introduced into the reactor while a precursor synthesis reaction proceeded. After the reaction was completed, washing and dehydration were performed, thereby obtaining a hydroxide precursor with a composition of Ni_{0.4}Mn_{0.6}(OH)₂.

### (b) First thermal treatment

After increasing the temperature of a furnace with an O₂ atmosphere at a rate of 2 °C/min and maintaining the temperature at 550 °C, the hydroxide precursor obtained in (a) was thermally treated for 5 hours, and then furnace cooling was performed, thereby obtaining an oxide-type precursor.

### (c) Second thermal treatment

A mixture was prepared by mixing the precursor in an oxide state obtained in (b), LiOH (Li/Metal molar ratio = 1.25) as a lithium raw material, LiF in which the content of fluorine (F) was weighed to be 1.8 mol% based on metal elements except lithium in the precursor, and WO₃ in which the content of tungsten (W) was weighed to be 0.75 mol% based on metal elements except lithium in the precursor.

Subsequently, after increasing the temperature of a furnace with an O₂ atmosphere at a rate of 2 °C/min and maintaining the temperature at 850 °C, the mixture was thermally treated for 8 hours, subjected to furnace cooling, and then distributed and disintegrated, thereby obtaining a positive electrode active material including a lithium manganese-based oxide (average particle diameter: 4.0 µm) as a final product.

### Example 2

A positive electrode active material (average particle diameter: 4.0 µm) was prepared in the same manner as in Example 1, except that the thermal treatment temperature in (c) was 900 °C instead of 850 °C.

### Example 3

A positive electrode active material (average particle diameter: 4.0 µm) was prepared in the same manner as in Example 1, except that the thermal treatment temperature in (c) was 950 °C instead of 850 °C.

### Example 4

A positive electrode active material (average particle diameter: 4.0 µm) was prepared in the same manner as in Example 1, except that MoOs, instead of WO₃, was used and the thermal treatment temperature in (c) was 900 °C instead of 850 °C.

### Example 5

A positive electrode active material (average particle diameter: 4.0 µm) was prepared in the same manner as in Example 1, except that Nb₂O₅, instead of WO₃, was used and the thermal treatment temperature in (c) was 900 °C instead of 850 °C.

### Comparative Example 1

A positive electrode active material (average particle diameter: 4.0 µm) was prepared in the same manner as in Example 1, except that LiF and WO₃ were not mixed in (c).

### Comparative Example 2

A positive electrode active material (average particle diameter: 4.0 µm) was prepared in the same manner as in Example 1, except that LiF was not mixed in (c).

### Comparative Example 3

A positive electrode active material (average particle diameter: 4.0 µm) was prepared in the same manner as in Example 1, except that WO₃ was not mixed in (c).

### Comparative Example 4

A positive electrode active material (average particle diameter: 4.0 µm) was prepared in the same manner as in Example 1, except that LiF and WO₃ were not mixed and in (c), and the thermal treatment temperature in (c) was 1,000 °C instead of 850 °C.

### Comparative Example 5

A positive electrode active material (average particle diameter: 4.0 µm) was prepared in the same manner as in Example 1, except that LiF weighed to be 0.1 mol% and WO₃ weighed to be 0.1 mol% were mixed in (c).

### Composition of lithium manganese-based oxide

The composition (molar ratio for each element) of a lithium manganese-based oxide included in each of the positive electrode active materials prepared according to Preparation Example 1 was measured through ICP analysis.

The measurement results are shown in Table 1 below.

**[Table 1]**

| Classification | Li/Me Molar ratio | Element content (mol%) | | | | |
|---|---|---|---|---|---|---|
| | | Ni | Mn | W | Mo | Nb |
| Example 1 | 1.23 | 39.45 | 59.81 | 0.74 | - | - |
| Example 2 | 1.24 | 39.57 | 59.68 | 0.75 | - | - |
| Example 3 | 1.23 | 39.52 | 59.72 | 0.76 | - | - |
| Example 4 | 1.24 | 39.47 | 59.78 | - | 0.75 | - |
| Example 5 | 1.23 | 39.61 | 59.64 | - | - | - |
| Comparative Example 1 | 1.25 | 39.99 | 60.01 | - | - | 0.75 |
| Comparative Example 2 | 1.23 | 39.50 | 50.75 | 0.75 | - | - |
| Comparative Example 3 | 1.24 | 39.87 | 60.13 | - | - | - |
| Comparative Example 4 | 1.23 | 39.98 | 60.02 | - | - | - |
| Comparative Example 5 | 1.25 | 39.90 | 60.00 | 0.1 | | - |

| | | | | | | |
|---|---|---|---|---|---|---|
| * The Li/Metal Molar ratio is a molar ratio of lithium to all elements except lithium in the lithium manganese-based oxide. * The element content (mol%) is calculated based on all elements except lithium in the lithium manganese-based oxide. | | | | | | |

### Preparation Example 2. Manufacture of lithium secondary battery

A positive electrode slurry was prepared by dispersing 90 wt% of each of the positive electrode active materials prepared according to Preparation Example 1, 4.5 wt% of carbon black, and 5.5 wt% of a PVDF binder in N-methyl-2 pyrrolidone (NMP). The positive slurry was uniformly applied on an aluminum thin film with a thickness of 15 µm and dried under vacuum at 135 °C, thereby manufacturing a positive electrode for a lithium secondary battery.

Lithium foil as a counter electrode for the positive electrode, a porous polyethylene film (Celgard 2300, thickness: 25 µm) as a separator, and a liquid electrolyte prepared by adding LiPF₆ at 1.15M in a solvent in which ethylene carbonate, dimethyl carbonate and ethyl methyl carbonate were mixed in a volume ratio of 2:4:4 were used, thereby manufacturing a half-cell.

### Experimental Example 1. Structural analysis of positive electrode active material

(1) After selecting a lithium manganese-based oxide in the form of a secondary particle from each of the positive electrode active materials prepared according to Preparation Example 1, an SEM image was obtained through photographing with a scanning electron microscope.
   Subsequently, 20 primary particles were selected in the order from longest-to-shortest minor axis lengths from the primary particles exposed on the surface of the secondary particle from the SEM image using an Image analyzer program, and the major axis length and the minor axis length were measured. From the measurement results, the average value (A) of the major axis lengths of the primary particles, the minimum value (B) of the major axis length of the primary particle, the minimum value (C) of the major axis length of the primary particle, the average value (D) of the minor axis lengths of the primary particles, the minimum value (E) of the minor axis length of the primary particle, the minimum value (F) of the minor axis length of the primary particle, and the average particle diameter ([major axis length+minor axis length]/2) (G) of the primary particles were calculated, respectively.
(2) In addition, each of the lithium manganese-based oxides (secondary particles) were cross-sectioned with a cross-section polisher (acceleration voltage: 5.0 kV, 4-hour milling), and photographed with a scanning electron microscope, thereby obtaining a cross-sectional SEM image.

Subsequently, the number of voids (H) was counted from the cross-sectional SEM image of the secondary particle using an Image analyzer program, and then cross-sectional porosity (I) was calculated.

The cross-sectional porosity (I) was obtained by binarizing the cross-sectional SEM image of a phase, and then calculating the ratio of the sum of all void areas in the secondary particle to the total area of the cross-section of the secondary particle ([the sum of all void areas in the secondary particle / the total area of the cross-section of the secondary particle]/100).

In addition, when the center of the primary particle is set from the binarized cross-sectional SEM image and the distance from the center to surface of the secondary particle is r, a region at a distance of 0.5r to 1.0r from the center of the secondary particle was defined as an external bulk region.

External bulk porosity (J) was calculated by dividing the sum of all void areas in the external bulk region by the total area of the cross-section of the external bulk region ([the sum of all void areas in the external bulk region / the total area of the external bulk region]/100).
(3) In addition, the BET specific surface area (K) was measured from the nitrogen gas adsorption amount of the lithium manganese-based oxide at a liquid nitrogen temperature (77K) using a gas adsorption-specific surface area measuring device (BELSORP-mini II, MicrotracBEL).
(4) After weighing 3 g each of the positive electrode active materials prepared in Preparation Example 1 and pressurizing the resultant with 4.5 tons for 5 seconds in a pelletizer, a press density (L) was measured.

The measurement results are shown in Tables 2 and 3.

**[Table 2]**

| Classifica tion | A | B | C | D | E | F | G |
|---|---|---|---|---|---|---|---|
| Units | run | nm | nm | nm | nm | nm | nm |
| Example 1 | 612 | 416 | 931 | 213 | 168 | 258 | 412 |
| Example 2 | 633 | 397 | 984 | 327 | 209 | 473 | 481 |
| Example 3 | 721 | 245 | 974 | 348 | 205 | 515 | 534 |
| Example 4 | 815 | 430 | 1,215 | 395 | 233 | 771 | 605 |
| Example 5 | 637 | 305 | 1,041 | 303 | 202 | 303 | 470 |
| Comparat ive Example 1 | 554 | 250 | 914 | 134 | 63 | 210 | 344 |
| Comparat ive Example 2 | 541 | 241 | 807 | 121 | 60 | 202 | 338 |
| Comparat ive Example 3 | 843 | 406 | 1,239 | 210 | 170 | 248 | 526 |
| Comparat ive Example 4 | 738 | 265 | 971 | 224 | 190 | 298 | 534 |
| Comparat ive Example 5 | 561 | 282 | 878 | 152 | 71 | 222 | 386 |

**[Table 3]**

| Classification | H | I | J | K | L |
|---|---|---|---|---|---|
| Units | count | % | % | m²/g | g/cc |
| Example 1 | 77 | 4.2 | 0.713 | 1.02 | 2.58 |
| Example 2 | 54 | 2.8 | 0.094 | 0.89 | 2.67 |
| Example 3 | 43 | 1.2 | 0.044 | 0.78 | 2.71 |
| Example 4 | 56 | 2.7 | 0.091 | 0.85 | 2.65 |
| Example 5 | 60 | 2.8 | 0.097 | 0.91 | 2.64 |
| Comparative Example 1 | 109 | 10.8 | 1.196 | 2.66 | 2.52 |
| Comparative Example 2 | 110 | 13.0 | 1.207 | 2.14 | 2.51 |
| Comparative Example 3 | 101 | 6.8 | 0.982 | 1.12 | 2.56 |
| Comparative Example 4 | 80 | 5.4 | 1.001 | 1.59 | 2.63 |
| Comparative Example 5 | 102 | 10.6 | 1.103 | 2.04 | 2.53 |

Comparing the lithium manganese-based oxides included in the positive electrode active materials according to Example 1 (co-doping of tungsten and fluorine was induced during calcination of an oxide precursor) and Comparative Example 1 (prepared under the same conditions as Example 1, except that co-doping of tungsten and fluorine was not induced during calcination of an oxide precursor), it can be confirmed that the co-doping of tungsten and fluorine during the calcination of the oxide precursor induces the growth of the major axis length and minor axis length of the primary particle.

In addition, the lithium manganese-based oxide according to Example 1 has lower cross-sectional porosity (I) and external bulk porosity (J) than those of Comparative Example 1. It can be confirmed that such a difference also affects the BET specific surface area (K) and press density (L) of the positive electrode active material including the lithium manganese-based oxide according to Example 1 and the positive electrode active material according to Comparative Example 1.

Comparing the lithium manganese-based oxides included in the positive electrode active materials according to Example 2 (co-doping of tungsten and fluorine was induced during calcination of an oxide precursor) and Comparative Example 2 (prepared under the same conditions as Example 2, except that only tungsten doping was induced during calcination of an oxide precursor), it can be confirmed that the co-doping of tungsten and fluorine during the calcination of the oxide precursor has a more significant influence on the growth of the major axis length and minor axis length of the primary particle than the tungsten-only doping.

Likewise, in Examples 4 and 5 with a different co-doping source from Examples 1 to 3, it can be confirmed that co-doping of molybdenum and fluorine or co-doping of niobium and fluorine induces the growth of the major axis length and minor axis length of the primary particle and also reduces the cross-sectional porosity and external bulk porosity thereof.

Meanwhile, referring to the result of Comparative Example 4 in which the calcination temperature of the oxide precursor is raised to be 1,000 °C, it can be confirmed that the growth of primary particles was generally induced, but the effect of reducing external bulk porosity is insufficient compared to the Examples.

In addition, referring to the result of Comparative Example 5 in which the content of a raw material is excessively small even when the raw materials for the co-doping of tungsten and fluorine were used during the calcination of an oxide precursor, it can be confirmed that the growth of the primary particles was hardly induced.

### Experimental Example 2. Evaluation of electrochemical properties of lithium secondary battery

A charging/discharging experiment was performed on each of the lithium secondary batteries (half-cells) manufactured in Preparation Example 2 using an electrochemical analyzer (Toyo, Toscat-3 100) at 25 °C in a voltage range of 2.0V to 4.6V at a discharge rate of 0.1 C to 5.0C to measure an initial charge capacity, an initial discharge capacity, a capacity per volume, an initial reversible efficiency, and a rate characteristic (rate capability (C-rate)). The capacity per volume was calculated by multiplying the initial discharge capacity and the press density (L in Table 3).

In addition, after 50 cycles of charging/discharging were performed on the same lithium secondary battery at 25 °C in an operating voltage range of 2.0V to 4.6V under the condition of 1C/1C, and then the rate capability at the 50^{th} cycle relative to the initial capacity (capacity retention) was measured.

The measurement results are shown in Table 4 below.

**[Table 4]**

| Classifica tion | Initial charge capacity (0.1C-rate) | Initial discharge capacity (0.1C-rate) | Capacity per unit volume | Initial reversible efficiency | Rate capability (2C/0.1C) | Rate capability (5C/0.1C) | Capacity retention (1C-rate, 50cycle) |
|---|---|---|---|---|---|---|---|
| Units | mAh/g | mAh/g | mAh/cc | % | % | % | % |
| Example 1 | 269 | 228 | 588 | 84.8 | 72.4 | 59.7 | 92.0 |
| Example 2 | 267 | 226 | 603 | 84.6 | 71.8 | 58.5 | 91.5 |
| Example 3 | 266 | 223 | 604 | 83.8 | 72.9 | 59.1 | 90.8 |
| Example 4 | 270 | 226 | 599 | 83.7 | 71.3 | 57.5 | 92.3 |
| Example 5 | 268 | 225 | 594 | 84.0 | 71.9 | 57.8 | 91.7 |
| Comparat ive Example 1 | 238 | 203 | 512 | 85.3 | 66.4 | 49.1 | 91.1 |
| Comparat ive Example 2 | 272 | 226 | 545 | 83.1 | 70.2 | 56.8 | 87.5 |
| Comparat ive Example 3 | 265 | 224 | 573 | 84.5 | 69.6 | 55.3 | 89.5 |
| Comparat ive Example 4 | 240 | 198 | 521 | 82.5 | 64.4 | 47.0 | 90.1 |
| Comparative Example 5 | 245 | 211 | 534 | 86.1 | 68.1 | 52.4 | 90.0 |

Referring to the results in Table 4, it can be confirmed that a lithium secondary battery using the positive electrode active material including the lithium manganese-based oxide according to Example 1 (the co-doping of tungsten and fluorine was induced during calcination of an oxide precursor) exhibits higher initial charge capacity, initial discharge capacity, rate capability and capacity retention than a lithium secondary battery using the positive electrode active material including the lithium manganese-based oxide according to Comparative Example 1 (the co-doping of tungsten and fluorine was not induced during calcination of an oxide precursor). Particularly, it can be confirmed that Example 1 is greatly improved in capacity per unit volume compared to Comparative Example 1.

In addition, referring to the result of Comparative Example 2 selectively doped with tungsten during the calcination of an oxide precursor, it can be confirmed that Comparative Example 2 exhibits lower capacity per unit volume and capacity retention than those of the Examples, although exhibiting similar levels of initial charge capacity and initial discharge capacity to the Examples.

Likewise, referring to the result of Comparative Example 3 selectively doped with fluorine during the calcination of an oxide precursor, it can be confirmed that Comparative Example 3 exhibits lower capacity per unit volume and rate characteristics than those of the Examples.

Meanwhile, it can be confirmed that, in Comparative Example 4 in which in which the calcination temperature of the oxide precursor is raised to be 1,000 °C, the overall growth of primary particles was induced to a similar level to those of the Examples, but the initial charge capacity, initial discharge capacity, capacity per unit volume and rate capability were lower than those of the Examples. It can be expected that this result is because deterioration occurs as the thermal damage to the lithium manganese-based oxide is caused by an excessively high calcination temperature during the second thermal treatment. Particularly, it can be confirmed that, due to the excessively lower initial discharge capacity than those of Examples, Comparative Example 4 shows a large difference in capacity per unit volume.

In addition, it can be confirmed that Comparative Example 5 in which the content of a raw material is excessively small even when using the raw materials for co-doping of tungsten and fluorine during the calcination of an oxide precursor exhibits lower initial charge capacity, initial discharge capacity, capacity per volume, rate capability and capacity retention than those of Example 1.

According to the present invention, it is possible to improve the limitations of a conventional overlithiated lithium manganese-based oxide, which has several disadvantageous aspects in terms of electrochemical properties and/or stability when comparing with a commercially available ternary lithium composite oxide with a nickel-cobalt-manganese (NCM) or nickel-cobalt-aluminum (NCA) composition.

Specifically, as the growth of primary particles constituting the lithium manganese-based oxide according to the present invention is induced, the primary particles can have a different shape from those constituting the lithium manganese-based oxide that is known so far. As such, according to the present invention, since the primary particles have different shape from the conventional shape, the overlithiated lithium manganese-based oxide can exhibit electrochemical properties and stability at commercially available levels.

First, when the growth of the primary particles constituting the lithium manganese-based oxide is induced, it is possible to prevent the rapid decrease in battery performance due to side reactions occurring in an initial battery reaction under a high-voltage condition by reducing the specific surface area of the lithium manganese-based oxide.

When the specific surface area of the lithium manganese-based oxide is reduced, it is possible to reduce the side reactions between the lithium manganese-based oxide and the liquid electrolyte. Particularly, OLO such as the lithium manganese-based oxide is advantageous for exhibiting a high capacity under a high-voltage operating environment, and it is important to reduce side reactions between the lithium manganese-based oxide and the liquid electrolyte because the possibility of the side reactions between the lithium manganese-based oxide and the liquid electrolyte can be promoted as an operating voltage increases.

Accordingly, as the side reactions between the lithium manganese-based oxide and the liquid electrolyte decrease, the stability and lifetime of a lithium secondary battery using the lithium manganese-based oxide as a positive electrode active material can be improved. Particularly, it is possible for a lithium secondary battery to be operated at a higher voltage with a positive electrode active material having suppressed side reactions with a liquid electrolyte.

In addition, as described above, when heterogeneous elements are co-doped during induction of the growth of the primary particles, the interparticle porosity between the primary particles forming the secondary particle can be reduced. As such, when the interparticle porosity in the lithium manganese-based oxide is reduced, it is possible to compensate for insufficient electrochemical properties of the positive electrode active material including the lithium manganese-based oxide by increasing the capacity per unit volume.

Particularly, due to elements doped when inducing the growth of the primary particle, the capacity and rate characteristics of the lithium manganese-based oxide can be improved.

As described above, when a positive electrode including the positive electrode active material defined herein is used, the degradation in rate characteristics caused by an excess of lithium and manganese in conventional OLO can be prevented, and side reactions between the positive electrode active material and a liquid electrolyte during high-voltage operation can be reduced, thereby realizing high stability.

In addition to the above effects, specific effects of the present invention will be described together while explaining specific details for carrying out the present invention.

In the above, the embodiments of the present invention have been described, but it will be understood by those of ordinary skill in the art that the present invention may be changed and modified in various ways by addition, alteration, or deletion of components without departing from the spirit of the present invention defined in the appended claims.

## Claims

1. A positive electrode active material comprising a lithium manganese-based oxide in which a phase belonging to a C2/m space group and a phase belonging to an R3-m space group are dissolved or complexed,
wherein the lithium manganese-based oxide comprises a secondary particle formed by aggregating a plurality of primary particles,
wherein the lithium manganese-based oxide comprises at least one selected from tungsten, molybdenum and niobium as a dopant,
at least some of the oxygens present in the lithium manganese-based oxide are substituted with a halogen, and
an interparticle porosity between the primary particles, measured from a cross-sectional SEM image of the secondary particle, is 10% or less.

2. The positive electrode active material of claim 1, wherein when the distance from the center to surface of the secondary particle set from the cross-sectional SEM image of the secondary particle is r, and a region at a distance of 0.5r to 1.0r from the center of the secondary particle is an external bulk region,
the porosity in the external bulk region is 1% or less.

3. The positive electrode active material of claim 1, wherein the average value of the minor axis lengths of the primary particles exposed on the surface of the secondary particle is 160 nm or more and 500 nm or less.

4. The positive electrode active material of claim 1, wherein the minimum value of the minor axis length measured for the primary particle exposed on the surface of the secondary particle is 80 nm or more.

5. The positive electrode active material of claim 1, wherein the maximum value of the minor axis length measured for the primary particle exposed on the surface of the secondary particle is 1 µm or less.

6. The positive electrode active material of claim 1, wherein the average value of the major axis lengths of the primary particles exposed on the surface of the secondary particle is 570 nm or more and 1 µm or less.

7. The positive electrode active material of claim 1, wherein the minimum value of the major axis length measured for the primary particle exposed on the surface of the secondary particle is 245 nm or more.

8. The positive electrode active material of claim 1, wherein the maximum value of the major axis length measured for the primary particle exposed on the surface of the secondary particle is 1.5 µm or less.

9. The positive electrode active material of claim 1, wherein the average value of the major axis lengths and minor axis lengths of the primary particles exposed on the surface of the secondary particle ([major axis length+minor axis length]/2) is 0.1 to 5 µm.

10. The positive electrode active material of claim 1, wherein the lithium manganese-based oxide is represented by Formula 1 below,
[Formula 1] rLi₂MnO_{3-b'}X'_{b'}·(1-r)LiₐM1ₓM2_{y}M3_{z}O_{2-b}X_{b}
Wherein,
M1 is at least one selected from Ni and Mn,
M2 is at least one selected from Ni, Mn, Co, Al, P, Nb, B, Ti, Zr, Ba, K, Mo, Si, Fe, Cu, Cr, Zn, Na, Ca, Mg, Pt, Au, Eu, Sm, W, V, Ta, Sn, Hf, Ce, Gd and Nd,
M3 is at least one selected from W, Mo and Nb,
M1 to M3 do not overlap,
X and X' are halogens capable of substituting for at least some of the oxygens in the lithium manganese-based oxide, and
0<r≤0.7, 0<a≤1, 0≤b≤0.1, 0≤b'≤0.1, 0<x≤1, 0≤y<1, 0<z≤0.1 and 0<x+y+z≤1, provided that b and b' are not 0 at the same time.

11. The positive electrode active material of claim 10, wherein the primary particle is doped with fluorine.

12. The positive electrode active material of claim 1, wherein the BET specific surface area of the secondary particle is 0.3 m²/g or more and 2.0 m²/g or less.

13. The positive electrode active material of claim 1, wherein a press density in the pressurization of the positive electrode active material with a pressure of 4.5 tons is greater than 2.53 g/cc.

14. A positive electrode comprising the positive electrode active material according to any one of claims 1 to 13.

15. A lithium secondary battery using the positive electrode of claim 14.
